# FASCICULE DE BREVET EUROPEEN

(11) **EP 2 191 953 B1**
(45) Date de publication et mention de la délivrance du brevet: **17.03.2021**
(21) Numéro de dépôt: 09176755.8
(22) Date de dépôt: 23.11.2009
(51) Int. Cl.: B29C 49/46, B29C 49/68, B29C 49/06, B29C 49/64

(54) **Four pour le conditionnement thermique de préformes comportant un plenum de ventilation**
Ofen für die Wärmevorbehandlung von Vorformlingen, der eine Belüftungskammer umfasst
Oven for the thermal conditioning of preforms, comprising a ventilation plenum

(30) Priorité: 01.12.2008 FR 0858163
(43) Date de publication de la demande: 02.06.2010
(73) Titulaire: SIDEL PARTICIPATIONS, 76930 Octeville-sur-Mer (FR)
(72) Inventeur: Quetel, François, 76930 Octeville-sur-Mer (FR); Demare, Jérôme, 76930 Octeville-sur-Mer (FR)
(74) Mandataire: Sidel Group

(56) Documents cités:
- EP-A- 0 564 354
- EP-A- 1 699 613
- WO-A-2008/105253
- US-A- 5 714 109

## Description

L'invention concerne un four pour le conditionnement thermique de préformes de récipients en matière thermoplastique qui comporte un plenum de ventilation selon la revendication 1.

L'invention concerne plus particulièrement un four pour le conditionnement thermique de préformes en matière thermoplastique, four qui est traversé d'amont en aval par un flux d'air de refroidissement des préformes et qui comporte, successivement selon le sens d'écoulement dudit flux d'air :
- une zone d'admission d'air qui comporte au moins une bouche d'admission d'air à travers laquelle ledit flux d'air s'écoule depuis l'extérieur du four, vers l'intérieur du four,
- une zone de chauffage des préformes, qui comporte des moyens de chauffage des préformes et au moins un module de ventilation qui est apte à guider vers les préformes le flux d'air provenant de la zone d'admission,
- une zone d'extraction d'air comportant au moins un conduit d'extraction d'air, la zone d'extraction étant traversée par le flux d'air qui s'écoule depuis la zone de chauffage, vers l'extérieur du four.

La fabrication de récipients, tels que des flacons, des bouteilles, etc. en matière thermoplastique, par exemple en PET (polyéthylène téréphtalate), est généralement réalisée à partir de préformes obtenues par injection.

De telles préformes sont préalablement conditionnées thermiquement dans un four afin de permettre leur transformation, notamment par une opération de soufflage, ou d'étirage-soufflage, en un récipient.

Les préformes ont généralement une forme d'éprouvette comportant principalement un corps, plus ou moins long, et un col qui a déjà sa forme définitive. En effet, le col de la préforme forme le goulot du récipient et comporte par exemple un filetage destiné à recevoir un bouchon à vis.

Le document EP0564354A1 décrit un fur de conditionement thermique de préformes conformément au préambule de la revendication 1.

Avant de réaliser l'opération de soufflage, il est nécessaire de chauffer le corps des préformes à une température supérieure à leur température de transition vitreuse, sans toutefois dégrader ou « brûler » la surface extérieure, ou peau, du corps des préformes.

A cet effet, il est connu de soumettre les préformes, lorsqu'elles se trouvent dans la zone de chauffage, à un flux d'air de refroidissement circulant dans cette zone. Ceci à pour effet de favoriser la chauffe par rayonnement en modérant les effets de conduction thermique au travers de la masse d'air contenue dans le four.

On connaît, par exemple du document EP-A1-1.699.613, un four de chauffage pour le conditionnement thermique de préformes, qui est traversé par un flux d'air de refroidissement des préformes.

Un tel four comporte principalement et successivement d'amont en aval selon le sens d'écoulement du flux d'air de refroidissement, une zone d'admission d'air, une zone de chauffage des préformes et une zone aval d'extraction d'air.

Les zones sont par exemple intégrées à l'intérieur du four et sont disposées de manière que l'extraction dans la zone d'extraction soit effectuée en partie haute ou supérieure du four, la zone de chauffage étant interposée entre la zone d'admission et la zone d'extraction.

La zone de chauffage est équipée de moyens de chauffage des préformes, par exemple des lampes à rayonnement infrarouge.

Les moyens de chauffage sont alignés dans le four de façon à s'étendre le long de tout ou partie du trajet des préformes dans le four.

L'une des préoccupations de l'homme du métier est la maîtrise du conditionnement thermique des préformes dont dépend directement la qualité du récipient final obtenu et à laquelle l'efficacité du refroidissement, comme du chauffage, est également étroitement liée.

Le four comporte une pluralité de modules de ventilation qui sont agencés dans la zone de chauffage du four et qui sont alignés en vis à vis des moyens de chauffage, afin de brasser l'air au voisinage des préformes.

Les modules de ventilation ont pour fonction de modérer les effets de conduction thermique au travers de la masse d'air contenue dans le four et d'utiliser au maximum le rayonnement infrarouge des moyens de chauffage, afin de réchauffer au mieux l'épaisseur du corps des préformes sans en brûler la peau. Ceci permet d'éviter toute dégradation de la peau des préformes mais également de maintenir l'environnement de la zone de chauffage en deçà de températures susceptibles d'affecter les organes mécaniques s'y trouvant, tels que par exemple les culots des lampes à rayonnement infrarouge.

Chaque module de ventilation est raccordé à un conduit d'admission d'air tubulaire de section circulaire qui s'étend dans la zone d'admission du four et qui débouche à l'extérieur du four.

De plus, chaque module de ventilation comporte une roue centrifuge montée rotative qui aspire l'air à travers le conduit d'admission et qui souffle l'air ainsi aspiré vers les préformes, de sorte que le flux d'air de refroidissement s'écoule au voisinage des préformes pour brasser l'air chaud au sein de la zone de chauffage du four.

Chaque roue centrifuge est agencée dans un carter qui guide le flux d'air de refroidissement vers les préformes.

Grâce à la circulation du flux d'air de refroidissement, on exploite au mieux le rayonnement infrarouge, ce qui permet de porter à la température désirée le corps des préformes, de manière homogène sur l'épaisseur de la paroi du corps, sans détériorer la peau du corps des préformes ou encore ramollir le col des préformes.

Généralement, le four comporte des moyens de protection qui sont aptes à protéger les cols des préformes des rayonnements infrarouges, ainsi que des moyens dédiés au refroidissement des cols, lesquels sont par exemple constitués par une partie du flux d'air de refroidissement et/ou des moyens de refroidissement supplémentaires, notamment par circulation d'eau.

De façon complémentaire, la zone d'extraction d'air du four comporte des moyens d'extraction qui sont associés au conduit d'extraction, tels qu'une hotte d'extraction d'air.

La hotte surplombe la zone de chauffage, et elle est destinée à extraire vers l'extérieur, à travers le conduit d'extraction, l'air provenant de la zone de chauffage du four, notamment afin d'évacuer des calories du four.

De tels moyens d'extraction permettent également de récupérer et d'évacuer des vapeurs résiduelles toxiques d'agent stérilisant lorsqu'une opération de décontamination de l'intérieur des préformes est mise en œuvre simultanément au conditionnement thermique.

Une telle opération de décontamination est avantageusement obtenue par le dépôt par condensation d'un agent stérilisant - comme le peroxyde d'hydrogène (H2O2) - destiné à être activé thermiquement dans le four par les moyens de chauffage puis évacué à l'état de vapeur par les moyens d'extraction d'air.

Une autre préoccupation de l'homme du métier concerne d'une manière générale l'hygiène et la propreté des récipients, donc la propreté des préformes destinées à être transformées en récipients après chauffage par soufflage (ou étirage-soufflage), les récipients étant ensuite de préférence remplis directement en milieu aseptique après leur fabrication.

Comme indiqué précédemment, il est connu de stériliser l'intérieur des préformes au moyen d'agent, tel que le peroxyde d'hydrogène, lequel s'évapore lorsqu'il est soumis aux moyens de chauffage du four, puis est aspiré par la hotte.

Complémentairement, il est connu de décontaminer l'extérieur de la préforme, notamment le col, par une irradiation aux rayons ultra-violets.

Enfin, il est connu d'équiper l'extrémité libre de chaque conduit d'admission par une bouche d'admission dans laquelle sont agencés des moyens de filtration de l'air, de sorte que les modules de ventilation délivrent aux préformes un air filtré présentant un degré de propreté déterminé.

Toutefois, la qualité de l'air ventilé dépend de l'efficacité des filtres.

Or, plus les filtres sont efficaces et plus ils s'opposent au passage de l'air et créent ainsi une perte de charge importante dans le circuit de ventilation.

Une perte de charge est préjudiciable au bon fonctionnement du four puisqu'elle se traduit par une diminution du débit d'air soufflé vers les préformes par les modules de ventilation et donc par une baisse des performances du refroidissement de l'air au voisinage des préformes.

L'invention vise notamment à améliorer encore la propreté des préformes, et donc des récipients, sans toutefois altérer ni le conditionnement thermique des préformes opéré dans le four, ni le débit d'air ventilé sur les préformes par les modules de ventilation.

Dans ce but, l'invention propose notamment de favoriser la qualité de filtration des moyens de filtration, tout en limitant les pertes de charges dans le circuit d'admission d'air, ou de refroidissement.

L'invention propose plus particulièrement un four du type décrit précédemment, caractérisé en ce que la zone d'admission d'air comporte :
- au moins deux modules de ventilation, et
- au moins une chambre de répartition d'air, dite plénum, qui est interposée entre la bouche d'admission d'air et chacun des modules de ventilation, chaque module de ventilation étant relié à la chambre de répartition.

Grâce à la chambre de répartition d'air, on augmente le rapport de la qualité de filtration de l'air aspiré par rapport à la perte de charge.

En effet, une telle chambre de répartition délimite un volume commun important d'air filtré dans lequel chaque module de ventilation puise de l'air filtré, grâce à quoi les pertes de charge sont réduites.

De plus, une telle chambre de répartition, grâce à son volume et à sa compacité, permet de limiter les étranglements dans le circuit de refroidissement, lesquels s'opposent à l'écoulement du flux d'air de refroidissement et favorisent les pertes de charge.

Selon d'autres caractéristiques de l'invention :
- chaque module de ventilation comporte une roue qui est montée rotative de façon à aspirer l'air contenu dans la chambre de répartition et à souffler l'air ainsi aspiré vers les préformes ;
- la chambre de répartition est de la forme d'un caisson parallélépipédique comportant au moins :
   -- une première grande face latérale ouverte qui comporte une première bouche d'admission d'air,
   -- une seconde grande face latérale ouverte qui est opposée et parallèle à la première grande face et qui comporte une seconde bouche d'admission d'air ;
- chaque bouche d'admission d'air comporte des moyens de filtration d'air associés ;
- chacun des moyens de filtration comporte successivement au moins :
   -- un pré-filtre amont qui est apte à filtrer des particules d'un premier diamètre déterminé, et
   -- un filtre aval qui est apte à filtrer des particules d'un second diamètre inférieur audit premier diamètre déterminé ;
- chaque pré-filtre amont est un filtre gravimétrique ;
- chaque bouche d'admission est d'une forme évasée vers l'extérieur du four, chaque pré-filtre amont étant agencé dans le tronçon le plus large de la bouche d'admission associée, en amont du filtre aval associé, de sorte que la section de passage de chaque pré-filtre amont est supérieure à la section de passage du filtre aval associé ;
- la chambre de répartition comporte une grande face qui s'étend orthogonalement auxdites grandes faces latérales, et sur laquelle est relié un collecteur d'air qui relie sélectivement chaque module de ventilation à la chambre de répartition ;
- la zone d'admission comporte des moyens de détection de l'encrassement desdits moyens de filtration, lesdits moyens de détection étant aptes à mesurer :
   -- une première pression différentielle entre un point situé directement en amont du pré-filtre et un point situé directement en aval du pré-filtre de la première bouche d'admission, et
   -- une seconde pression différentielle entre un point situé directement en amont du filtre et un point situé directement en aval du filtre de la première bouche d'admission,
   -- et à comparer chaque pression différentielle à une valeur prédéterminée de pression respective, grâce à quoi il est possible d'évaluer individuellement les états respectifs d'encrassement du pré-filtre et du filtre.

D'autres caractéristiques et avantages de l'invention, ainsi que des détails de conception et de réalisation apparaîtront à la lecture de la description détaillée qui va suivre pour la compréhension de laquelle on se reportera aux dessins annexés dans lesquels :
- la figure 1 est une vue d'ensemble en perspective, qui illustre un exemple de réalisation d'un four selon l'invention, comportant successivement une zone d'admission d'air, une zone de chauffage des préformes et une zone d'extraction d'air ;
- la figure 2 est une vue schématique en section transversale, qui illustre l'écoulement, d'amont en aval, d'un flux d'air de refroidissement à travers les zones du four de la figure 1 et une chambre de répartition du flux d'air de refroidissement reliée à une pluralité de modules de ventilation ;
- la figure 3 est une vue schématique en section longitudinale, qui illustre l'agencement d'une pluralité de chambres de répartition dans la zone d'admission du four de la figure 1 ;
- la figure 4 est une vue de détail en perspective, qui illustre une chambre de répartition équipée de deux bouches d'admission et un collecteur auquel sont reliés les modules de ventilation du four de la figure 1 ;
- la figure 5 est une vue de détail en section et en perspective, qui illustre des moyens de filtration agencés à l'intérieur de la chambre de répartition et une roue centrifuge agencée dans un module de ventilation du four de la figure 1.

Dans la description et les revendications, on adoptera par convention et à titre non limitatif les termes "avant" ou "arrière" en référence à la direction longitudinale, "supérieur" et "inférieur", en référence à la direction verticale et selon la gravité terrestre, et les directions longitudinale, verticale et transversale en référence aux trièdres (L, V, T) indiqués sur les figures.

On utilisera aussi les expressions "amont" et "aval" en référence au sens de circulation du flux d'air de refroidissement à l'intérieur du four, c'est-à-dire depuis la zone d'admission, dite amont, vers la zone d'extraction, dite aval, du four.

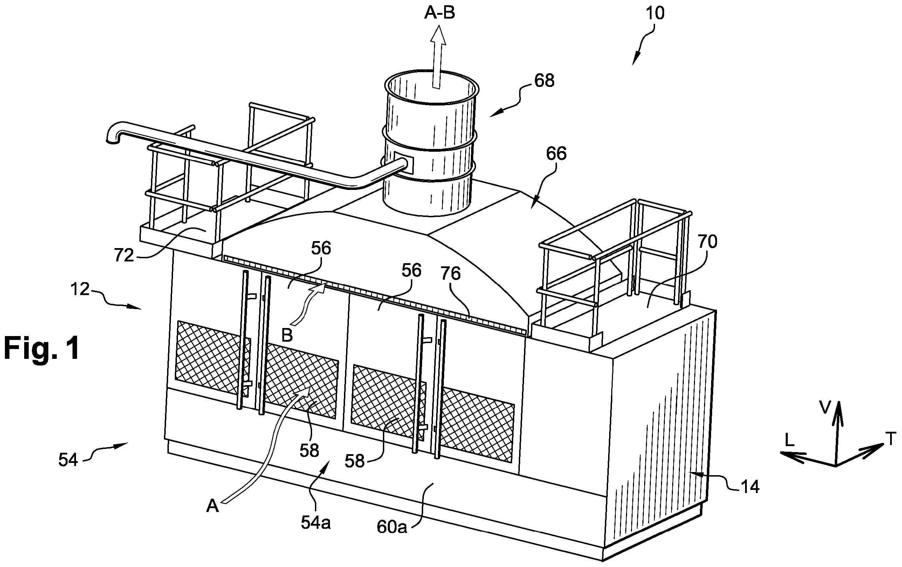

On a représenté à la figure 1 un four 10 pour le conditionnement thermique de préformes (non représentées) en matière thermoplastique, par exemple en PET (Polyéthylène Téréphtalate).

Le four 10 comporte par exemple ici un parcours de chauffe des préformes en « U » comportant deux tronçons longitudinaux de chauffage parallèles, l'un aller, l'autre retour, raccordés entre eux un tronçon curviligne transversal, dit de stabilisation.

Le four 10 a globalement la forme d'un tunnel qui s'étend longitudinalement, d'arrière en avant, depuis un premier côté arrière 12, jusqu'à un second côté avant 14 opposé fermé.

Le côté arrière 12 est ouvert pour permettre le passage des préformes. Toutefois, il est ouvert dans une zone en surpression, comme il sera décrit ultérieurement, de sorte que des particules polluantes ne peuvent pas pénétrer dans le four par ce côté arrière 12.

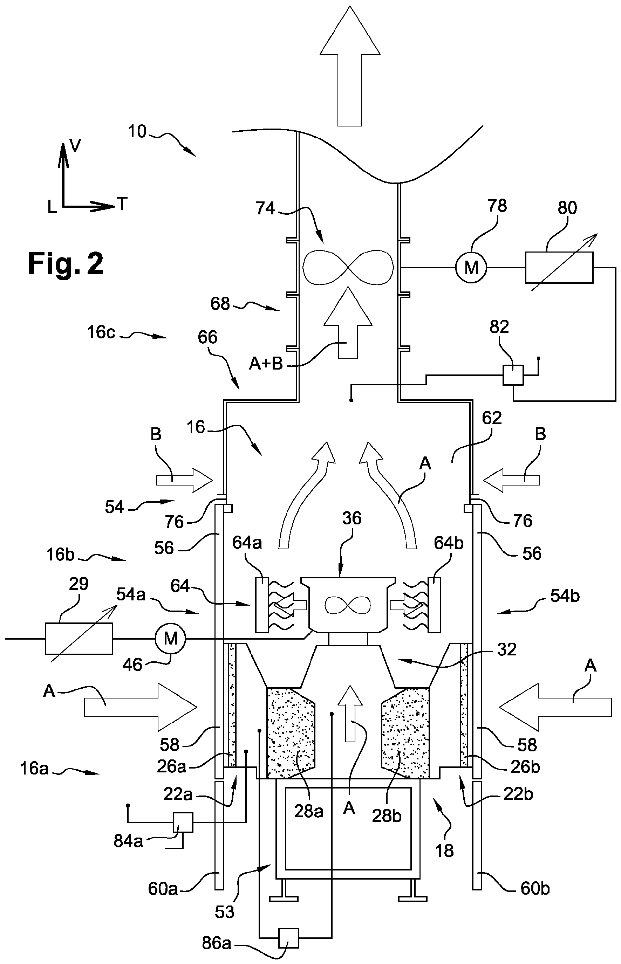

Comme on peut le voir à la figure 2, le four 10 présente une symétrie générale de conception par rapport à un plan vertical médian (non représenté) s'étendant longitudinalement en passant par le milieu du four 10, et des éléments identiques sont désignés par les mêmes références indicées.

Le four 10 n'est que l'un des postes d'une installation de fabrication de récipients, par exemple de bouteilles, à partir de préformes.

Une telle installation de fabrication comporte par exemple un dispositif d'alimentation (non représenté) en préformes, qui alimente le four 10 en préformes par le côté arrière 12 du four 10.

Les préformes sont introduites à l'intérieur du four 10 par des moyens de transfert au niveau du côté arrière 12 où les préformes sont prises en charge par des moyens de convoyage du four 10, opération encore appelée « vêtissage ».

Les préformes sont ensuite entraînées dans le four 10 par les moyens de convoyage (non représentés), par exemple ici suivant un parcours de chauffe en U.

Enfin, les préformes ressortent du four 10 à travers le côté arrière 12 et sont, après avoir été conditionnées thermiquement par le four 10, prises en charge par d'autres moyens de transfert (non représentés) pour les acheminer directement vers un dispositif de moulage (non représenté) en vue de leur transformation par soufflage, ou par étirage-soufflage en un récipient.

Avantageusement, les moyens de convoyage des préformes sont aptes à transporter les préformes suivant le parcours de chauffe et comportent des éléments de support (non représentés), encore appelés parfois « tournettes », dont chacun coopère avec la paroi interne du goulot de chaque préforme.

De préférence, les éléments de support des moyens de convoyage sont aptes à entraîner en rotation sur elle-même chaque préforme afin de favoriser une répartition appropriée de la chaleur dans le corps de chaque préforme.

Selon la figure 2, le four 10 est traversé par un flux d'air A de refroidissement des préformes, qui s'écoule d'amont en aval, à travers le four 10, plus précisément ici verticalement de bas en haut.

Comme on peut le voir aux figures 1 et 2, le four 10 comporte pour l'essentiel un circuit de refroidissement 16, comportant successivement selon le sens d'écoulement du flux d'air A, une zone d'admission 16a d'air, encore dite zone amont, une zone de chauffage 16b des préformes et une zone d'extraction 16c d'air, encore dite zone aval.

Les trois zones 16a, 16b, 16c sont ici superposées verticalement et l'écoulement du flux d'air A s'effectue successivement à travers chaque zone, depuis le bas vers le haut, c'est-à-dire également suivant un gradient thermique depuis la zone la plus froide vers la zone la plus chaude.

Avantageusement, un tel agencement des zones du circuit de refroidissement permet d'obtenir un four présentant une bonne compacité et d'exploiter le principe de convection.

La zone d'admission 16a d'air comporte au moins une chambre de répartition d'air 18, dite plénum, qui est ici de la forme d'un caisson parallélépipédique à travers lequel le flux d'air A de refroidissement s'écoule depuis l'extérieur du four 10, vers l'intérieur du four 10.

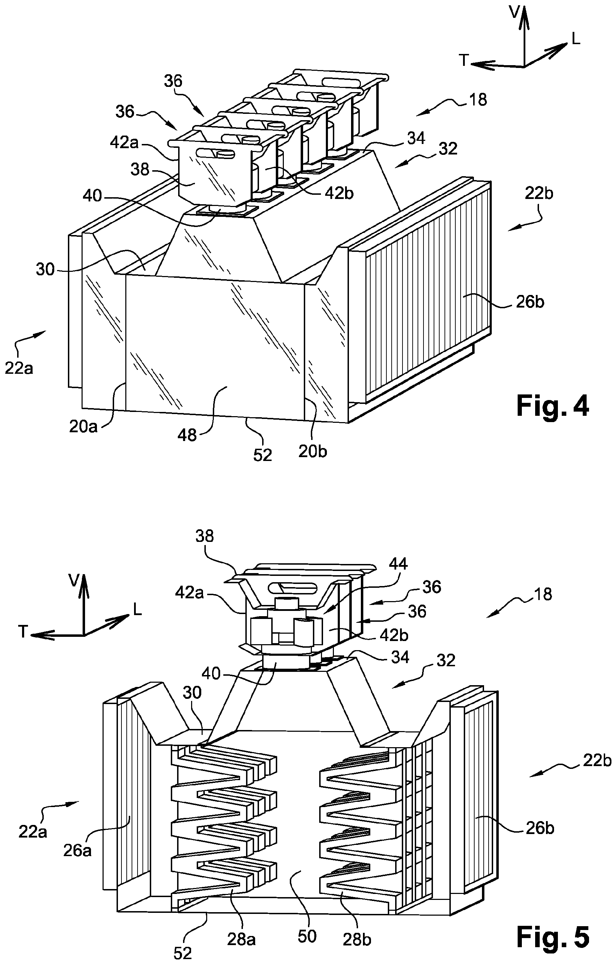

A cet effet, comme on peut le voir à la figure 4, le plénum 18 comporte une première grande face 20a verticale longitudinale qui est équipée d'une première bouche d'admission 22a d'air.

La bouche d'admission 22a s'étend transversalement depuis le plénum 18 et est d'une forme évasée, de section transversale croissante vers l'extérieur du four 10.

Selon les figures 2 et 5, la bouche d'admission 22a comporte des premiers moyens de filtration 26a, 28a, dont un pré-filtre 26a qui est agencé au voisinage d'un orifice amont de la bouche d'admission 22a et un filtre 28a qui est agencé au voisinage d'un orifice aval de la bouche d'admission 22a.

Selon la figure 5, le pré-filtre 26a est agencé dans le tronçon le plus large de la bouche d'admission 22a associée, en amont du filtre 28a, de sorte que la section de passage du pré-filtre 26a est supérieure à la section de passage du filtre 28a.

De préférence, le pré-filtre 26a est un filtre gravimétrique, qui est apte à filtrer des particules dites grossières, qui sont d'un diamètre déterminé, par exemple supérieur à dix microns.

De même, le filtre 28a est un filtre du type dit « opacimétrique », qui est apte à filtrer des particules dites fines d'un diamètre déterminé, par exemple supérieur à un micron.

Par symétrie selon le plan de symétrie générale, le plénum 18 comporte une seconde grande face 20b verticale longitudinale qui est agencée en vis à vis de la première grande face 20a qui est équipée d'une seconde bouche d'admission 22b d'air.

De même, la bouche d'admission 22b comporte des seconds moyens de filtration 26b, 28b avec un pré-filtre 26b et un filtre 28b.

Ainsi, chaque bouche d'admission 22a, 22b est équipée de moyens de filtration de l'air aspiré, de sorte que seul de l'air filtré, avec un degré de propreté déterminé, est aspiré et introduit dans la zone d'admission 16a du four 10.

Le plénum 18 comporte une troisième grande face 30 supérieure horizontale, sur laquelle est relié un collecteur 32 d'air qui s'étend longitudinalement sur toute la longueur du plenum 18.

Le collecteur 32 est d'une section transversale trapézoïdale décroissante vers le haut, et il est délimité vers le haut par une face supérieure 34 de répartition.

De plus, le plénum 18 est délimité longitudinalement par une première plaque transversale verticale 48 et par une seconde plaque transversale verticale 50 opposée à la première plaque transversale verticale 48.

Enfin, le plénum 18 est délimité verticalement vers le bas par une plaque de fond 52 longitudinale transversale.

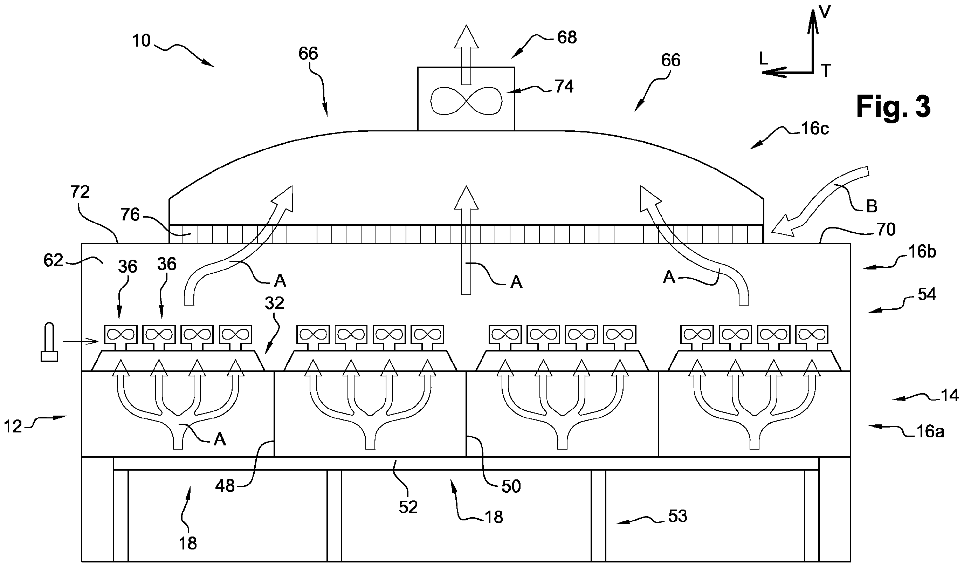

Selon les figures 2 et 3, le four 10 comporte un châssis 53 qui supporte le plenum 18 dans une position surélevée du sol et qui est en appui sous la plaque de fond 52 du plenum 18.

L'ensemble constitué par le plenum 18, les deux bouches d'admission 22a, 22b et le collecteur 32, délimite un volume important d'air filtré et des grandes entrées d'air, grâce à quoi les pertes de charge dans le circuit de refroidissement 16 sont limitées.

La zone de chauffage 16b du four 10 comporte des modules de ventilation 36, tels que des ventilateurs centrifuges de refroidissement qui sont alignés selon un axe longitudinal au dessus du collecteur 32 du plenum 18.

Chaque module de ventilation 36 comporte un carter 38 délimitant un collier d'admission 40 inférieur vertical qui est raccordé à la face supérieure 34 de répartition du collecteur 32.

De plus, chaque carter 38 délimite un premier orifice de ventilation 42a et un second orifice de ventilation 42b.

Enfin, chaque module de ventilation 36 comporte une roue 44 centrifuge, ou d'extraction, par exemple une roue à aubes, qui est montée tournante autour d'un axe vertical, dans le carter 38 associé, et qui est apte à être entraînée en rotation, par exemple par un actionneur associé, comme un moteur 46 électrique représenté schématiquement à la figure 2.

La rotation de la roue 44 créé une dépression en amont de la roue 44, pour aspirer l'air extérieur à travers le plenum 18, et une surpression en aval de la roue 44.

Ainsi, le flux d'air A s'écoule depuis le plenum 18, après avoir été filtré par les moyens de filtration 26a, 28a, 26b, 28b, puis il s'écoule à travers le collier d'admission 40 de chaque module de ventilation 36.

Enfin, le flux d'air A est soufflé dans la zone de chauffage 16b, à travers le premier orifice de ventilation 42a et le second orifice de ventilation 42b de chaque module de ventilation 36, afin de brasser l'air au voisinage des préformes.

Selon l'exemple de réalisation illustré aux figures 3 à 5, le plenum 18 comporte quatre modules de ventilation 36; il est bien entendu que ce nombre pourrait être différent.

De plus, selon la figure 3, le four 10 comporte une série de plenum 18, ici au nombre de quatre, qui sont accolés entre eux et alignés dans le sens de leur longueur selon une direction longitudinale, chaque plenum 18 comportant une série de quatre modules de ventilation 36 associés.

Comme on peut le voir sur les figures 1 à 3, la zone de chauffage 16b est délimitée transversalement par une enceinte périphérique 54.

L'enceinte périphérique 54 comporte au moins une partie, dite inférieure, comportant une première paroi 54a latérale verticale et une seconde paroi 54b latérale verticale qui sont agencées transversalement en vis à vis et dont chacune s'étend longitudinalement, pour délimiter transversalement entre elles, à l'intérieur du four 10, la zone de chauffage 16b.

De plus, la zone de chauffage 16b est délimitée longitudinalement vers l'avant par le côté avant 14 fermé, et vers l'arrière par le côté arrière 12 ouvert.

Chaque paroi 54a, 54b latérale de l'enceinte périphérique 54 comporte de préférence une pluralité de portes 56, ici au nombre de quatre, qui permettent d'accéder à l'intérieur du four 10, par exemple pour exécuter des opérations de contrôle ou de maintenance à l'intérieur du four 10.

Chaque porte 56 comporte une grille 58 d'aération pour permettre l'écoulement du flux d'air A par aspiration, depuis l'extérieur du four 10, jusqu'au plenum 18.

Comme on peut le voir à la figure 2, chaque grille 58 d'aération est agencée en vis à vis d'une bouche d'admission 22a, 22b associée, de sorte que le passage de l'air qui s'écoule depuis l'extérieur du four 10, jusqu'à l'intérieur du plenum 18 en passant par les bouches d'admissions 22a, 22b n'est peu ou pas entravé par les grilles 58.

Chaque paroi 54a, 54b de l'enceinte périphérique 54 comporte une plaque inférieure 60a, 60b respectivement d'habillage du four 10, qui s'étend verticalement sensiblement du bas des portes 56 jusqu'au sol.

Selon les figure 2 et 3, la zone de chauffage 16b est délimitée verticalement vers le bas par une face supérieure de l'ensemble constitué par les plenum 18, les bouches d'admission 22a, 22b associées et les collecteurs 32 associés.

Enfin, l'enceinte périphérique 54 délimite, en aval, une ouverture supérieure 62, qui débouche verticalement vers le haut, pour permettre au flux d'air A de s'écouler vers le haut.

L'ouverture supérieure 62 s'étend sur tout le périmètre du four 10, longitudinalement depuis le côté arrière 12 jusqu'au côté avant 14 et transversalement entre les parois de l'enceinte périphérique 54.

Selon la figure 2, la zone de chauffage 16b comporte des moyens de chauffage 64 latéraux des préformes, par exemple de lampes à rayonnement infrarouge qui, lorsqu'elles sont activées, irradient les corps des préformes pour les chauffer et les porter à une température propre à permettre leur transformation ultérieure en récipient.

Les lampes à rayonnement infrarouge sont par exemple superposées dans un râtelier (non représenté) formant un module de chauffage, des modules de chauffage étant accolés les uns à la suite des autres selon le parcours de défilement des préformes dans le four 10, de façon à former un premier tronçon 64a longitudinal de lampes et un second tronçon 64b longitudinal de lampes en vis à vis.

Comme on peut le voir à la figure 2, les modules de ventilation 36 sont interposés transversalement entre le premier tronçon 64a longitudinal de lampes et le second tronçon 64b longitudinal de lampes, de sorte que les préformes défilent entre les lampes et les orifices de ventilation 42a, 42b des modules de ventilation 36.

L'air soufflé par les modules de ventilation 36 s'écoule de préférence à travers des réflecteurs (non représentés) ajourés qui sont agencés au voisinage des orifices de ventilation 42a, 42b des modules de ventilation 36 et qui comportent par exemple des fentes d'orientation verticales.

Les réflecteurs sont disposés transversalement en vis-à-vis des moyens de chauffage 64 et sont destinés à réfléchir les rayonnements infrarouges pour accroître l'efficacité du chauffage, tout en permettant le passage de l'air de refroidissement.

Ainsi, les modules de ventilation 36 brassent l'air qui est situé au voisinage des moyens de chauffage 64 et des préformes, afin notamment d'éviter de brûler la peau du corps des préformes et d'homogénéiser la chauffe du corps des préformes.

De plus, les modules de ventilation 36 créent une surpression dans la zone de chauffage 16b, au voisinage des préformes, ce qui empêche que tout autre air que de l'air filtré n'entre en contact avec les préformes.

Le moteur 46 qui entraîne en rotation la roue 44 d'extraction de chaque module de ventilation 36 coopère avec un premier moyen de pilotage 29, pour faire varier la vitesse de rotation des roues 44 et par conséquent faire varier le débit d'air soufflé sur les préformes.

Avantageusement, la zone de chauffage 16b comporte des moyens de protection thermique (non représentés) du col des préformes pour éviter leur déformation par chauffage.

Enfin, selon les figures 1 à 3, la zone d'extraction 16c d'air du four 10 comporte une hotte 66 qui s'étend vers le haut depuis l'ouverture supérieure 62 de la zone de chauffage 16b, jusqu'à un conduit d'extraction 68, de façon à isoler la zone de chauffage 16b par rapport à l'extérieur du four 10, pour éviter la pollution de l'intérieur du four 10 par des particules polluantes aéroportées.

La hotte 66 comporte une embase inférieure de forme rectangulaire et présente une forme évasée vers la zone de chauffage 16b, donc une section de passage décroissante vers le haut.

L'embase de la hotte 66 comporte deux bords longitudinaux opposés, globalement rectilignes, qui sont reliés à un bord supérieur des parois 54a, 54b latérales respectivement du four 10.

De façon complémentaire, la hotte 66 comporte une première plaque 70 et une seconde plaque 72 horizontales supérieures qui sont respectivement accolées à un premier bord et à un second bord transversal de l'embase de la hotte 66, afin de délimiter verticalement la zone de chauffage 16b du four 10.

La première plaque 70 et la seconde plaque 72 sont ici chacune équipée d'une trappe de visite (non représentée), pour accéder à l'intérieur du four 10 depuis le dessus du four 10, par exemple pour exécuter des tâches de maintenance.

Le conduit d'extraction 68 comporte un moyen d'extraction 74 associé, par exemple un ventilateur, qui est apte à créer une dépression en amont du moyen d'extraction 74, dans le conduit d'extraction 68.

Le terme dépression signifie ici une pression inférieure à la pression atmosphérique qui règne à l'extérieur du four 10.

Ainsi, le flux d'air A s'écoule depuis l'intérieur du four 10, vers l'extérieur du four 10, selon le sens des flèches représentées aux figures 2 et 3.

L'extrémité aval du conduit d'extraction 68 est par exemple raccordée à un circuit d'évacuation (non représenté) qui guide l'air extrait du four 10 dans un circuit de chauffage de locaux, ou à l'extérieur du local dans lequel est situé le four 10.

Partant de l'hypothèse que le four 10 n'est pas parfaitement étanche à l'air, et que le moyen d'extraction 68 d'extraction engendre une dépression au sein du four 10, des filets d'air parasites risquent de pénétrer dans le four 10, notamment autour des portes 56.

Pour éviter la pénétration à l'intérieur du four 10 de tels filets d'air dont la qualité est incontrôlée, la hotte 66 délimite des bouches d'entrée d'air 76 secondaires, ou auxiliaires, qui sont agencées en aval de la zone de chauffage 16b, de sorte qu'un flux d'air B, dit de fuite, s'écoule à travers les bouches d'entrée d'air 76 sous l'effet de la dépression engendrée par le moyen d'extraction 74.

Ainsi, l'air du flux d'air B de fuite s'écoule depuis l'extérieur du four 10, directement jusqu'au conduit d'extraction 68 d'air, sans passer par la zone sensible de chauffage 16b.

Une telle conception favorise l'entrée d'air à travers les bouches d'entrée d'air 76, plutôt qu'à travers une entrée d'air parasite, non contrôlée, sans risquer de polluer les préformes ou des organes internes du four 10.

Avantageusement, le débit d'extraction d'air par le conduit d'extraction 68 est supérieur au débit d'air filtré aspiré et ventilé par les modules de ventilation 36, de manière à évacuer la totalité de l'air de refroidissement ventilé et à garantir que l'air pénétrant de façon parasite à l'intérieur du four 10 en raison de la dépression existant en amont du conduit d'extraction 68 pénètre exclusivement par lesdites bouches d'entrée d'air 76 secondaire.

Selon un autre aspect, le moyen d'extraction 74 est entraîné en rotation au moyen d'un second moteur 78 qui, en fonction de son régime de fonctionnement, fait varier la vitesse de rotation du moyen d'extraction 74 et par conséquent, fait varier la dépression en aval du moyen d'extraction 74 et le débit d'air extrait par le moyen d'extraction 74 à travers le conduit d'extraction 68.

A cet effet, selon la figure 2, le four 10 comporte un second moyen de pilotage 80 du moyen d'extraction 74, qui coopère avec le second moteur 78 afin d'en faire varier le régime de fonctionnement.

De plus, le four 10 comporte un premier moyen de mesure 82 de la dépression au sein de la zone d'extraction 16c d'air, en amont du moyen d'extraction 74.

Comme on peut le voir à la figure 2, le moyen de mesure 82 de la dépression est ici un moyen de mesure de pression différentielle, ou transmetteur de pression différentielle, par exemple un capteur de pression piézorésistif.

Le moyen de mesure 82 de la dépression mesure la différence de pression entre l'extérieur du four 10 et un point situé à l'intérieur de la hotte 66, en amont du moyen d'extraction 74 et en aval des bouches d'entrée d'air 76 associées.

Le second moyen de pilotage 80 pilote le moyen d'extraction 74 en fonction de la valeur de la pression différentielle mesurée par le moyen de mesure 82 et d'une valeur consigne de dépression, afin de réguler le débit d'air extrait par le moyen d'extraction 74 suivant la valeur consigne associée.

La valeur consigne de dépression est prédéterminée de manière à créer une dépression au sein de la hotte 66, grâce à quoi le débit d'air extrait à travers le conduit d'extraction 68 est supérieur au débit d'air soufflé sur les préformes par les modules de ventilation 36.

La valeur consigne de dépression est par exemple comprise entre 0 et 100 Pascals.

Ainsi, le moyen de pilotage 80 constitue un moyen d'asservissement des modules de ventilation 36 et du moyen d'extraction 74.

Le moyen de pilotage 80 permet d'obtenir un débit constant d'air, en fonction de la valeur consigne de dépression, indépendamment de l'état d'encrassement des moyens de filtration 26a, 28a, 26b, 28b.

Le four 10 fonctionne selon un mode dit de production, dans lequel les moyens de chauffage 64 sont activés, ou selon un mode dit hors production, dans lequel les moyens de chauffage 64 sont désactivés.

Le mode de production correspond à un fonctionnement normal de chauffage des préformes, et le mode hors production correspond à tout autre état de fonctionnement du four 10, par exemple un mode de veille du four 10, ou un mode de maintenance.

Les modules de ventilation 36 et le moyen d'extraction 74 sont entraînés en rotation en permanence, quel que soit le mode selon lequel le four 10 fonctionne, grâce à quoi le four 10 est traversé en permanence par le flux d'air A de refroidissement.

Ainsi, seul de l'air filtré s'écoule à travers la zone de chauffage 16b, empêchant ainsi le dépôt de particules polluantes sur les préformes ou des organes internes du four 10.

De plus, les modules de ventilation 36 sont pilotés par le moyen de pilotage 29 associé, de sorte que le débit d'air qui est obtenu grâce aux modules de ventilation 36 est inférieur en mode hors production qu'en mode production du four 10.

De même, la valeur consigne de dépression varie en fonction du mode selon lequel le four fonctionne, la valeur consigne de dépression étant moins grande lorsque le four 10 fonctionne en mode hors production.

Plus particulièrement, lorsque le four 10 fonctionne selon son mode hors production, la valeur consigne de dépression est déterminée de sorte que le débit du flux d'air extrait par le moyen d'extraction 74 est suffisant pour extraire le surplus de chaleur dans le four 10.

De même, lorsque le four 10 fonctionne selon son mode hors production, la première valeur consigne de dépression est déterminée de sorte que le débit du flux d'air extrait par le moyen d'extraction 74 est suffisant pour empêcher que des éventuelles particules polluantes de se déposer sur les préformes ou sur un organe interne du four 10, notamment les particules polluantes qui sont aspirées à travers les bouches d'entrée d'air 76 secondaire.

Selon un autre aspect, la zone d'admission 16a d'air comporte des moyens 84a, 86a de détection de l'encrassement des moyens de filtration 26a, 28a.

Les moyens de détection 84a, 86a de l'encrassement comportent un second moyen de mesure 84a de la dépression, qui est similaire au premier moyen de mesure 82 décrit précédemment.

Le second moyen de mesure 84a, illustré schématiquement à la figure 2, mesure la différence de pression entre l'extérieur du four 10 et un point qui est situé entre le pré-filtre 26a et le filtre 28a de la première bouche d'admission 22a d'air.

Ainsi, le second moyen de mesure 84a est apte à mesurer l'état d'encrassement, ou de colmatage, du pré-filtre 26a par comparaison de la dépression mesurée avec une valeur de référence prédéterminée.

De même, les moyens de détection 84a, 86a de l'encrassement comportent un troisième moyen de mesure 86a qui mesure la différence de pression entre un point qui est situé entre le pré-filtre 26a et le filtre 28a, et un point qui est situé directement en aval du filtre 28a de la première bouche d'admission 22a.

Ainsi, le troisième moyen de mesure 86a est apte à mesurer l'état d'encrassement, ou de colmatage, du filtre 28a par comparaison de la dépression mesurée avec une valeur de référence prédéterminée.

Par symétrie, la zone d'admission 16a d'air comporte des moyens supplémentaires (non représentés) de détection de l'encrassement des moyens de filtration 26b, 28b de la seconde bouche d'admission 22b.

Lorsque les moyens de filtration 26a, 28a, 26b, 28b sont encrassés, ils sont soit nettoyés et stérilisés par exemple au moyen de vapeur d'eau, soit remplacés en tout ou partie, les parties remplacées étant alors jetées et les autres étant nettoyées.

Selon une variante de réalisation non représentée, le four 10 comporte un premier moyen de mesure du débit d'air qui est agencé dans le conduit d'extraction 68, et un second moyen de mesure du débit d'air qui est agencé dans le plenum 18.

Selon cette variante, le premier et le second moyens de mesure du débit d'air coopèrent chacun avec le second moyen de pilotage 80 du moyen d'extraction 74, de sorte que le débit d'air qui est extrait à travers le conduit d'extraction 68 est supérieur au débit d'air obtenu grâce aux modules de ventilation 36.

Enfin, dans le but de garantir un degré élevé d'hygiène et de propreté des préformes, le four 10 comporte des moyens de stérilisation, ou d'aseptisation, (non représentés) qui sont aptes à émettre des rayons ultra-violets, afin d'irradier des organes internes du four qui sont susceptibles d'être en contact avec la préforme, par exemple les moyens de supports, ou tournettes, qui coopèrent avec la paroi interne du col des préformes.

Avantageusement, les préformes sont stérilisées au moyen d'un agent stérilisant, tel que du peroxyde d'hydrogène déposé par condensation à l'intérieur de la préforme, lequel agent s'évapore lorsqu'il est soumis aux moyens de chauffage du four 10, puis est aspiré par la hotte 66.

Selon une autre variante de réalisation, le plenum 18 est d'une forme cylindrique d'axe vertical dont la paroi cylindrique constitue une bouche d'admission d'air périphérique.

Selon une autre variante de réalisation, chaque module de ventilation 36 est raccordé directement au collecteur 32 du plénum, de sorte que le carter 38 associé ne comporte pas de collier d'admission 40, afin de réduire d'avantage la perte de charge entre le plenum 18 et les modules de ventilation 36.

De même, selon une autre variante, chaque module de ventilation 36 est raccordé directement au plenum 18, sans l'intermédiaire du collecteur 32.

A titre non limitatif, l'invention concerne aussi un four 10 qui ne comporte pas de moyen d'extraction 74, et/ou pas de module de ventilation 36 pour souffler l'air sur les préformes, le four 10 étant alors par exemple traversé d'amont en aval par un flux d'air de refroidissement qui s'écoule verticalement vers le conduit d'extraction 68 par convection.

De même, l'écoulement du flux d'air A de refroidissement à travers le four 10 peut être initié par tout moyen de soufflage ou d'aspiration, quel que soit son agencement dans le four 10 ou au voisinage du four 10.

Par exemple, le flux d'air A de refroidissement peut être initié par un moyen de soufflage qui est agencé en amont du plenum 18 et qui permet de souffler de l'air à travers les bouches d'admissions 22a, 22b du plenum 18.

De même, l'invention n'est nullement limitée à un four de forme globalement parallélépipédique, tel que celui décrit ci-dessus.

L'invention s'applique aussi à un four en forme d'arc, ou circulaire, ou annulaire, ou toutes autres formes.

L'invention présente de nombreux avantages, elle permet notamment de réduire la perte de charge dans le circuit d'air, depuis l'extérieur du four 10 jusqu'aux modules de ventilation 36.

En effet, le plenum 18 constitue une chambre de répartition d'air, ou une réserve d'air, dans laquelle les modules de ventilation 36 associés puisent l'air avec peu ou pas de perte de charge.

De même, le plenum 18 constitue une chambre commune de répartition, qui permet de s'affranchir de la contrainte de relier chaque module de ventilation 36 à l'extérieur du four 10 au moyen d'un conduit cheminée associé.

En outre, le plenum 18 est conformé de façon à réduire la distance entre les modules de ventilation 36, et l'entrée d'air, ici les bouches d'admissions 22a, 22b.

En effet, le plenum 18 s'étend verticalement jusqu'au dessous des modules de ventilation 36 et au plus près des modules de ventilation 36, ce qui permet de s'affranchir de tout ou partie des conduits cheminée selon l'état de la technique, grâce à quoi les pertes de charges sont réduites.

Le plenum 18 permet d'exploiter au mieux le volume utile de la zone d'admission 16a du four 10, en s'étendant latéralement jusqu'aux parois du four 10 et sensiblement jusqu'aux modules de ventilation 36.

Ainsi, le plenum 18 offre un rapport encombrement/perte de charge avantageux.

La conception du plenum 18 permet de l'équiper de grandes bouches d'admission et d'augmenter la surface filtrante totale des moyens de filtrage, en limitant les étranglements entre les bouches d'admission et les modules de ventilation 36.

Enfin, l'invention concerne aussi un four qui comporte un seul module de ventilation et un plenum associé du type décrit précédemment.

## Revendications

1. Four (10) pour le conditionnement thermique de préformes en matière thermoplastique, four (10) qui est traversé d'amont en aval par un flux d'air (A) de refroidissement des préformes et qui comporte, successivement selon le sens d'écoulement dudit flux d'air (A) :
- une zone d'admission (16a) d'air, qui comporte au moins une bouche d'admission (22a) d'air à travers laquelle ledit flux d'air (A) s'écoule depuis l'extérieur du four (10) vers l'intérieur du four (10),
- une zone de chauffage (16b) des préformes, qui comporte des moyens de chauffage (64) des préformes et au moins un module de ventilation (36) qui est apte à guider vers les préformes le flux d'air (A) provenant de la zone d'admission (16a),
- une zone d'extraction (16c) d'air comportant au moins un conduit d'extraction (68) d'air, la zone d'extraction (16c) étant traversée par le flux d'air (A) qui s'écoule depuis la zone de chauffage (16b), vers l'extérieur du four (10),
**caractérisé en ce que** la zone d'admission (16a) d'air comporte :
- au moins deux modules de ventilation (36), et
- au moins une chambre de répartition (18) d'air, dite plénum, qui est interposée entre la bouche d'admission (22a) d'air et chacun des modules de ventilation (36), chaque module de ventilation (36) étant relié à la chambre de répartition (18).

2. Four (10) selon la revendication 1, **caractérisé en ce que** chaque module de ventilation (36) comporte une roue (44) qui est montée rotative de façon à aspirer l'air contenu dans la chambre de répartition (18) et à souffler l'air ainsi aspiré vers les préformes.

3. Four (10) selon l'une des revendications 1 ou 2, **caractérisé en ce que** la chambre de répartition (18) est de la forme d'un caisson parallélépipédique comportant au moins :
- une première grande face (20a) latérale ouverte qui comporte une première bouche d'admission (22a) d'air,
- une seconde grande face (20b) latérale ouverte qui est opposée et parallèle à la première grande face (20a) et qui comporte une seconde bouche d'admission (22b) d'air.

4. Four (10) selon l'une quelconque des revendications 1 à 3, **caractérisé en ce que** chaque bouche d'admission (22a, 22b) d'air comporte des moyens de filtration (26a, 28a, 26b, 28b) d'air associés.

5. Four (10) selon la revendication 4, **caractérisé en ce que** chacun des moyens de filtration (26a, 28a, 26b, 28b) comporte successivement au moins :
- un pré-filtre (26a, 26b) amont qui est apte à filtrer des particules d'un premier diamètre déterminé, et
- un filtre (28a, 28b) aval qui est apte à filtrer des particules d'un second diamètre inférieur audit premier diamètre déterminé.

6. Four (10) selon la revendication 5 **caractérisé en ce que** chaque pré-filtre (26a, 26b) amont est un filtre gravimétrique.

7. Four (10) selon les revendications 5 ou 6, **caractérisé en ce que** chaque bouche d'admission (22a, 22b) est d'une forme évasée vers l'extérieur du four (10), chaque pré-filtre (26a, 26b) amont étant agencé dans le tronçon le plus large de la bouche d'admission (22a, 22b) associée, en amont du filtre (28a, 28b) aval associé, de sorte que la section de passage de chaque pré-filtre (26a, 26b) amont est supérieure à la section de passage du filtre (28a, 28b) aval associé.

8. Four (10) selon la revendication 3, **caractérisé en ce que** la chambre de répartition (18) comporte une grande face (30) qui s'étend orthogonalement auxdites grandes faces (20a, 20b) latérales, et sur laquelle est relié un collecteur (32) d'air qui relie sélectivement chaque module de ventilation (36) sur la chambre de répartition (18).

9. Four (10) selon la revendication 4, **caractérisé en ce que** la zone d'admission (16a) comporte des moyens de détection (84a, 86a) de l'encrassement desdits moyens de filtration (26a, 28a), lesdits moyens de détection étant aptes à mesurer :
- une première pression différentielle entre un point situé directement en amont du pré-filtre (26a) et un point situé directement en aval du pré-filtre (26a) de la première bouche d'admission (22a), et
- une seconde pression différentielle entre un point situé directement en amont du filtre (28a) et un point situé directement en aval du filtre (28a) de la première bouche d'admission (22a),
- et à comparer chaque pression différentielle à une valeur prédéterminée de pression respective, grâce à quoi il est possible d'évaluer individuellement l'état d'encrassement du pré-filtre (26a) et du filtre (28a).

## Patentansprüche

1. Ofen (10) zur thermischen Konditionierung von Vorformlingen aus thermoplastischem Stoff, wobei der Ofen (10) zum Kühlen der Vorformlinge von vorne nach hinten von einem Luftstrom (A) durchquert wird und gemäß der Strömungsrichtung des Luftstroms (A) nacheinander aufweist:
- einen Lufteinlassbereich (16a), der mindestens einen Lufteinlassschacht (22a) aufweist, durch den der Luftstrom (A) von der Außenseite des Ofens (10) zur Innenseite des Ofens (10) strömt,
- einen Heizbereich (16b) der Vorformlinge, der Heizeinrichtungen (64) der Vorformlinge und mindestens ein Gebläsemodul (36) aufweist, das geeignet ist, den vom Einlassbereich (16a) kommenden Luftstrom (A) zu den Vorformlingen zu lenken,
- einen Luftentnahmebereich (16c), der mindestens einen Luftentnahmekanal (68) aufweist, wobei der Entnahmebereich (16c) von dem Luftstrom (A) durchquert wird, der vom Heizbereich (16b) zur Außenseite des Ofens (10) strömt,
**dadurch gekennzeichnet, dass** der Lufteinlassbereich (16a) aufweist:
- mindestens zwei Gebläsemodule (36), und
- mindestens eine Luftverteilungskammer (18), Plenum genannt, die zwischen den Lufteinlassschacht (22a) und jedes der Gebläsemodule (36) eingefügt ist, wobei jedes Gebläsemodul (36) mit der Verteilungskammer (18) verbunden ist.

2. Ofen (10) nach Anspruch 1, **dadurch gekennzeichnet, dass** jedes Gebläsemodul (36) ein Rad (44) aufweist, das drehbar montiert ist, um die in der Verteilungskammer (18) enthaltene Luft anzusaugen und die so angesaugte Luft zu den Vorformlingen zu blasen.

3. Ofen (10) nach einem der Ansprüche 1 oder 2, **dadurch gekennzeichnet, dass** die Verteilungskammer (18) die Form eines parallelepipedischen Kastens hat, der mindestens aufweist:
- eine erste offene seitliche große Seite (20a), die einen ersten Lufteinlassschacht (22a) aufweist,
- eine zweite offene seitliche große Seite (20b), die der ersten großen Seite (20a) gegenüberliegt und parallel zu ihr ist und die einen zweiten Lufteinlassschacht (22b) aufweist.

4. Ofen (10) nach einem der Ansprüche 1 bis 3, **dadurch gekennzeichnet, dass** jeder Lufteinlassschacht (22a, 22b) zugeordnete Luftfiltereinrichtungen (26a, 28a, 26b, 28b) aufweist.

5. Ofen (10) nach Anspruch 4, **dadurch gekennzeichnet, dass** jede der Filtereinrichtungen (26a, 28a, 26b, 28b) nacheinander mindestens aufweist:
- einen vorderen Vorfilter (26a, 26b), der Partikel eines ersten bestimmten Durchmessers filtern kann, und
- einen hinteren Filter (28a, 28b), der Partikel eines zweiten Durchmessers kleiner als der erste bestimmte Durchmesser filtern kann.

6. Ofen (10) nach Anspruch 5, **dadurch gekennzeichnet, dass** jeder vordere Vorfilter (26a, 26b) ein gravimetrischer Filter ist.

7. Ofen (10) nach den Ansprüchen 5 oder 6, **dadurch gekennzeichnet, dass** jeder Einlassschacht (22a, 22b) eine zur Außenseite des Ofens (10) ausgeweitete Form hat, wobei jeder vordere Vorfilter (26a, 26b) in dem breitesten Abschnitt des zugeordneten Einlassschachts (22a, 22b) vor dem zugeordneten hinteren Filter (28a, 28b) angeordnet ist, so dass der Durchgangsquerschnitt jedes vorderen Vorfilters (26a, 26b) größer als der Durchgangsquerschnitt des zugeordneten hinteren Filters (28a, 28b) ist.

8. Ofen (10) nach Anspruch 3, **dadurch gekennzeichnet, dass** die Verteilungskammer (18) eine große Seite (30) aufweist, die sich orthogonal zu den seitlichen großen Seiten (20a, 20b) erstreckt und auf der ein Luftkollektor (32) verbunden ist, der selektiv jedes Gebläsemodul (36) auf der Verteilungskammer (18) verbindet.

9. Ofen (10) nach Anspruch 4, **dadurch gekennzeichnet, dass** der Einlassbereich (16a) Erfassungseinrichtungen (84a, 86a) der Verschmutzung der Filtereinrichtungen (26a, 28a) aufweist, wobei die Erfassungseinrichtungen messen können:
- einen ersten Differenzdruck zwischen einem direkt vor dem Vorfilter (26a) befindlichen Punkt und einem direkt hinter dem Vorfilter (26a) des ersten Einlassschachts (22a) befindlichen Punkt, und
- einen zweiten Differenzdruck zwischen einem direkt vor dem Filter (28a) befindlichen Punkt und einem direkt hinter dem Filter (28a) des ersten Einlassschachts (22a) befindlichen Punkt,
- und jeden Differenzdruck mit einem jeweiligen vorbestimmten Druckwert vergleichen können, wodurch es möglich ist, den Verschmutzungsgrad des Vorfilters (26a) und des Filters (28a) individuell zu ermitteln.

## Claims

1. Oven (10) for the thermal conditioning of preforms made of thermoplastic material, an oven (10) which is passed through from upstream to downstream by an airstream (A) for cooling the preforms and which comprises, in succession in the direction of flow of said airstream (A):
- an air intake zone (16a), which comprises at least one air intake opening (22a) through which said airstream (A) flows from the outside of the oven (10) to the inside of the oven (10),
- a preform heating zone (16d), which comprises preform heating means (64) and at least one ventilation module (36) which is capable of guiding the airstream (A) coming from the intake zone (16a) to the preforms,
- an air extraction zone (16c) comprising at least one air extraction duct (68), the extraction zone (16c) being passed through by the airstream (A) which flows from the heating zone (16d) to the outside of the oven (10),
**characterized in that** the air intake zone (16a) comprises:
- at least two ventilation modules (36), and
- at least one air distribution chamber (18), called plenum which is interposed between the air intake opening (22a) and each of the ventilation modules (36), each ventilation module (36) being linked to the distribution chamber (18).

2. Oven (10) according to Claim 1, **characterized in that** each ventilation module (36) comprises a wheel (44) which is mounted to rotate so as to suck the air contained in the distribution chamber (18) and blow the duly sucked air to the preforms.

3. Oven (10) according to one of Claims 1 and 2, **characterized in that** the distribution chamber (18) is in the form of a parallelepipedal box comprising at least:
- one first open lateral large face (20a) which comprises a first air intake opening (22a),
- a second open lateral large face (20b) which is opposite and parallel to the first large face (20a) and which comprises a second air intake opening (22) .

4. Oven (10) according to any one of Claims 1 to 3, **characterized in that** each air intake opening (22a, 22b) comprises associated air filtration means (26a, 28a, 26b, 28b).

5. Oven (10) according to Claim 4, **characterized in that** each of the filtration means (26a, 28a, 26b, 28b) comprises, in succession, at least:
- an upstream prefilter (26a, 26b) which is capable of filtering particles of a first determined diameter, and
- a downstream filter (28a, 28b) which is capable of filtering particles of a second diameter smaller than said first determined diameter.

6. Oven (10) according to Claim 5, **characterized in that** each upstream prefilter (26a, 26b) is a gravimetric filter.

7. Oven (10) according to Claim 5 or 6, **characterized in that** each intake opening (22a, 22b) is of a form flared outward from the oven (10), each upstream prefilter (26a, 26b) being arranged in the wider section of the associated intake opening (22a, 22b), upstream of the associated downstream filter (28a, 28b), such that the section of passage of each upstream prefilter (26a, 26b) is greater than the section of passage of the associated downstream filter (28a, 28b).

8. Oven (10) according to Claim 3, **characterized in that** the distribution chamber (18) comprises a large face (30) which extends orthogonally to said lateral large faces (20a, 20b), and to which is linked an air manifold (32) which selectively links each ventilation module (36) to the distribution chamber (18) .

9. Oven (10) according to Claim 4, **characterized in that** the intake zone (16a) comprises means (84a, 86a) for detecting the clogging of said filtration means (26a, 28a), said detection means being capable of measuring:
- a first differential pressure between a point situated directly upstream of the prefilter (26a) and a point situated directly downstream of the prefilter (26a) of the first intake opening (22a), and
- a second differential pressure between a point situated directly upstream of the filter (28a) and a point situated directly downstream of the filter (28a) of the first intake opening (22a),
- and of comparing each differential pressure to a respective predetermined pressure value, thereby allowing the state of clogging of the prefilter (26a) and of the filter (28a) to be assessed individually.
